# EUROPÄISCHE PATENTSCHRIFT

(11) **EP 0 771 712 B1**
(45) Veröffentlichungstag und Bekanntmachung des Hinweises auf die Patenterteilung: **07.04.1999**
(21) Anmeldenummer: 96116918.2
(22) Anmeldetag: 22.10.1996
(51) Int. Cl.: B62B 3/18

(54) **Stapelbarer Einkaufswagen**
Nestable shopping trolley
Chariot d'achat emboîtable

(30) Priorität: 31.10.1995 DE 29517226 U
(43) Veröffentlichungstag der Anmeldung: 07.05.1997
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- DE-U- 9 404 262

## Beschreibung

Die Erfindung betrifft einen stapelbaren Einkaufswagen, mit einem Fahrgestell, mit einer Warentrageinrichtung, die an ihrem hinteren Ende von einer verschwenkbaren Rückenwand begrenzt ist, mit einer Schiebeeinrichtung und mit einer im hinteren Bereich des Einkaufswagens vorgesehenen, aus einer Nichtgebrauchslage in eine Gebrauchslage und umgekehrt bewegbaren, mit einer Stellfläche und mit einer ortsfesten Anschlageinrichtung ausgestatteten Ablage, die zur Aufnahme größerer Gegenstände bestimmt ist, wobei die ortsfeste Anschlageinrichtung nach oben gerichtet am hinteren Ende der Stellfläche angeordnet ist.

Einkaufswagen dieser Art sind beispielsweise in den europäischen Patentschriften EP 0 141 398, EP 0 254 210, EP 0 349 423 und EP 0 402 551 näher beschrieben.

Bei Einkaufswagen, deren Ablagen so konstruiert sind, daß diese sich bevorzugt zum Transport von großen Getränkekisten eignen, ist es schlecht möglich, auch kleine oder halbe Getränkekisten sicher zur transportieren. Ursache ist die bei diesen Ablagen gewählte Anschlageinrichtung, die relativ niedrig gestaltet sein muß, damit sich die Ablagen mehrerer Einkaufswagen beim platzsparenden Stapeln der Wagen nicht als hinderlich erweisen. Inzwischen werden vermehrt sogenannte 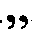 PET" - Getränkeflaschen verkauft, die in relativ kleinen Kisten oder Traggestellen angeboten werden. Da größere Getränkekisten weiterhin im Handel sind, sollen die Ablagen der Einkaufswagen zum Transport von unterschiedlichsten Getränkekisten gleichermaßen gut geeignet sein.

Die Aufgabe der Erfindung besteht darin, einen gattungsgemäßen Einkaufswagen so weiterzuentwickeln, daß die eben genannte Forderung erfüllt ist.

Zur Lösung dieser Aufgabe wird vorgeschlagen, eine weitere Anschlageinrichtung vorzusehen, die am hinteren Ende der Ablage um eine horizontale Achse bewegbar so angeordnet ist, daß sie in Gebrauchslage höher ist als die ortsfeste Anschlageinrichtung und daß sie in Nichtgebrauchslage entweder auf der Stellfläche der Ablage aufliegt oder in diese eingebettet ist oder daß sie an der ortsfesten Anschlageinrichtung anliegt.

Mit einer derartig gestalteten Ablage können in vorteilhafter Weise die verschiedensten Getränkekisten sicher transportiert werden, denn gilt es, eine kleine oder eine halbe Getränkekiste sicher auf der Ablage abzustellen, so genügt es, die weitere Anschlageinrichtung nach oben in ihre Gebrauchslage zu schwenken, so daß die Getränkekiste durch die höhere Anschlageinrichtung sicher abgestützt ist. Will man hingegen eine große Getränkekiste transportieren, so verbleibt die weitere Anschlageinrichtung bevorzugt auf der Stellfläche der Ablage in ihrer Nichtgebrauchslage, da die bisherige niedrigere Anschlageinrichtung als Sicherung völlig ausreicht. Der Benutzer des Einkaufswagens kann somit, je nachdem welche Getränkekisten er transportieren will, selbst bestimmen, ob er die weitere Anschlageinrichung nutzen will oder nicht. Die weitere Anschlageinrichtung ist in zweckmäßiger Weise so gestaltet bzw. so gelagert, daß diese dann von selbst die Nichtgebrauchslage aufsucht, wenn zum Zwecke des Stapelns die gesamte Ablage in die Nichtgebrauchslage bewegt wird.

Die Erfindung wird anhand mehrerer Ausführungsbeispiele näher erläutert.
Es zeigt
- Fig. 1 bis Fig. 3: Einkaufswagen mit verschiedenen Ablagen;
- Fig. 4: stellvertretend Ihr die verschiedenen Ablagen eine Ablage schematisch dargestellt sowie
- Fig. 5: eine weitere Ausbildung einer Ablage.

Die nachfolgend dargestellten und beschriebenen Einkaufswagen 1 stellen nur einen Teil jener Einkaufswagen 1 dar, bei welchen die Neuerung anwendbar ist. Alle diese Einkaufswagen 1 weisen ein Fahrgestell 2 auf, das eine Warentrageinrichtung 8 in der bevorzugten Form eines Korbes oder allgemein eines Behältnisses trägt. Zu diesem Zweck weisen die Fahrgestelle 2 der Einkaufswagen 1 nach oben gerichtete oder gekrümmte Träger 3 auf, an welchen die Warentrageinrichtung 8 befestigt ist. Am hinteren Ende 6 der Einkaufswagen 1 ist eine Schiebeeinrichtung 7 vorgesehen, die entweder am Fahrgestell 2, oder wie üblich, an der Warentrageinrichung 8 angeordnet ist. Eine aus Drahtgitter und/oder aus Kunststoff bestehende Rückwand 10, die das hintere Ende der Warentrageinrichtung 8 begrenzt, ist in bekannter Weise um eine oben liegende horizontale Achse 11 verschwenkbar gelagert, damit in ebenfalls bekannter Weise solche Einkaufswagen 1 platzsparend ineinandergeschoben, also gestapelt werden können. Sowohl die Warentrageinrichtung 8 als auch das Fahrgestell 2 sind deshalb entsprechend konisch, gewöhnlich in Schieberichtung sich verjüngend gestaltet. Im hinteren Bereich 13 der Einkaufswagen 1 ist eine Ablage 14 vorgesehen, die zur Aufnahme größerer Gegenstände 27, wie Flaschenpackungen, Schachteln, Gebinde, usw. geeignet ist. Die Ablagen 14 lassen sich aus einer Nichtgebrauchslage, in der sie sich gewöhnlich unterhalb der Warentrageinrichtung 8 befinden, nach rückwärts in eine Gebrauchslage und umgekehrt bewegen. Bein, Stapelvorgang mehrerer Einkaufswagen 1 werden in Gebrauchslage befindliche Ablagen 14 vom jeweils rückwärtig einzuschiebenden Einkaufswagen 1 von selbst in die Nichtgebrauchslage gedrückt.

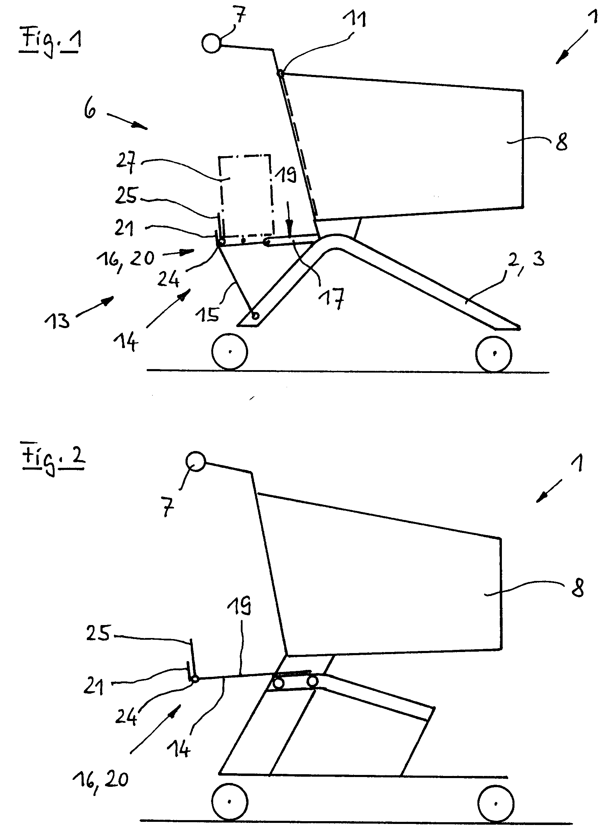

Bei dem in Fig. 1 dargestellten Einkaufswagen 1 ist die Ablage 14 so gestaltet, wie dies in der europäischen Patentschrift 0 141 398 beschrieben ist. Die Ablage 14 besteht aus einem Schwenkteil 15 und aus einem Halteteil 17. Am hinteren Ende 20 der Stellfläche 19 der Ablage 14, also an deren hinterem Ende 16, ist eine Anschlageinrichtung 21 vorgesehen, die ortsfest angeordnet ist, nach oben ragt und mit der Stellfläche 19, von der Seite betrachtet, an ein 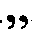 L" erinnert. An oder nahe der Stellfläche 19 ist eine weitere Anschlageinrichtung 25 uni eine quer zur Schieberichtung des Einkaufswagens 1 sich erstreckende horizontale Achse 24 begrenzt verschwenkbar so gelagert, daß die weitere Anschlageinrichtung 25 in Gebrauchslage parallel zur ortsfesten Anschlageinrichtung 21 und bevorzugt an diese angrenzend angeordnet ist und in Nichtgebrauchslage auf der Stellfläche 19 aufliegt oder, um Unebenheiten zu vermeiden, in die Stellfläche 19 eingebettet ist. Auf der Ablage 14 ist eine kleine Getränkekiste 27 abgestellt.

Der in Fig. 2 gezeigte Einkaufswagen 1 orientiert sich an jenen Einkaufswagen 1, die in der DE-OS 34 48 335.7 oder in der EP 0 402 551 beschrieben sind. Am hinteren Ende 20 der Stellfläche 19 der Ablage 16 ist neben der ortsfesten Anschlageinrichtung 21 die weitere Anschlageinrichtung 25 in gleicher Weise angeordnet, wie in Fig. 1 beschrieben.

Der in Fig. 3 dargestellte Einkaufswagen 1 entspricht einem von der Firma Clares Equipment Großbritannien entwickelten Einkaufswagen 1. Die Ablage 14 ist vorderendig in Führungen 4 schiebebeweglich gelagert und weist am hinteren Ende ein Schwenkteil 15 auf, dessen Stützen am Fahrgestell 2 drehbeweglich gelagert sind. Am hinteren Ende 20 der Stellfläche 19, und damit am hinteren Ende 16 der Ablage 14, befindet sich die ortsfeste Anschlageinrichtung 21. Ihr benachbart ist ebenfalls auf oder nahe der Stellfläche 19 gelagert die weitere Anschlageinrichtung 25 am hinteren Ende 16 der Ablage 14 angeordnet.

In Fig. 4 ist in schematischer Weise lediglich die Ablage 14 dargestellt. Diese steht stellvertretend für alle möglichen Ausführungsformen von Ablagen 14, seien diese nun tablett- oder schubladenartig gestaltet oder zweiteilig gewählt. Alle diese Ablagen 14 weisen eine Stellfläche 19 sowie eine am hinteren Ende 20 der Stellfläche 19 in einem Winkel nach oben sich erstreckende ortsfeste Anschlageinrichtung 21 auf. Am hinteren Ende 16 der Ablage 14, an oder nahe der Stellfläche 19 ist die weitere Anschlageinrichtung 25 um eine quer zur Schieberichtung des Einkaufswagens 1 sich erstreckende horizontale Achse 24 gelagert und läßt sich aus einer nach oben gerichteten Gebrauchslage in eine parallel zur Stellfläche 19 gelegenen Nichtgebrauchslage (strichpunktiert gezeichnet) und umgekehrt bewegen. Die weitere Anschlageinrichtung 25 ist höher (Maß B) als die ortsfeste Anschlageinrichtung 21 (Maß A). Dadurch lassen sich kleinere Getränkekisten oder Gegenstände 27, vor einem Herabfallen von der Ablage 14 gesichert, bequem transportieren. Da die Ablagen 14 gewöhnlich aus Stäben oder Drähten gestaltet sind, läßt sich die bevorzugt bügelförmig gestaltete weitere Anschlageinrichtung 25 mit ihren Bügelschenkeln 26 bevorzugt an einem der Querdrähte 18 der Ablage 14 bewegbar so anlenken, daß die in Gebrauchslage nach oben ragenden Bügelschenkel 26, und damit die Anschlageinrichtung 25, an der ortsfesten Anschlageinrichtung 21 anschlagen oder anliegen. In der Nichtgebrauchslage ist die weitere Anschlageinrichtung 25 bevorzugt Bestandteil der Stellfläche 19, ohne über diese nach oben hinauszuragen.

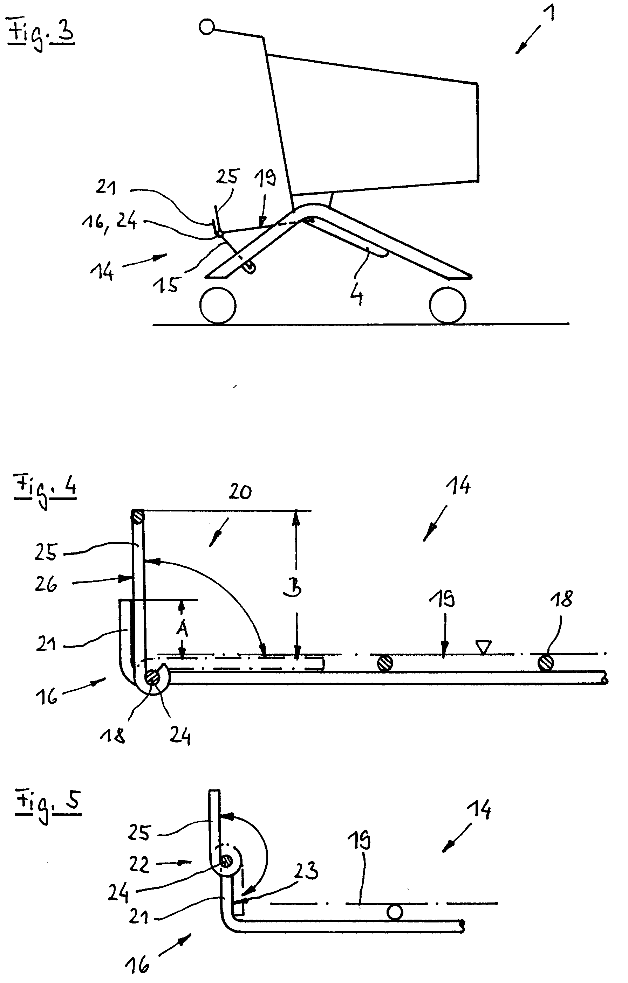

Entsprechend Fig. 5 ist es auch möglich, die weitere Anschlageinrichtung 25 am hinteren Ende 16 der Ablage 14 am oder nahe des oberen Randes 22 der ortsfesten Anschlageinrichtung 21 um eine horizontale Achse 24 verschwenkbar zu lagern und mit Mitteln auszustatten, welche die Schwenkbeweglichkeit der Anschlageinrichtung 25 begrenzen. In Nichtgebrauchslage liegt die weitere Anschlageinrichtung 25 an der Innenseite 23 der ortsfesten Anschlageinrichtung 21 an.

Wie bereits eingangs erwähnt, ist die weitere Anschlageinrichtung 25 durch geeignete Wahl ihres Gesamtschwerpunktes bevorzugt so gestaltet, daß sie in ihrer Gebrauchslage gerade noch verharrt, jedoch sofort dann von selbst ihre Nichtgebrauchslage aufsucht, wenn die Ablage 14, etwa beim Stapeln mehrerer Einkaufswagen 1, oder auch von Hand, in die Nichtgebrauchslage bewegt wird. Auf diese Weise stört die weitere Anschlageinrichtung 25 den Stapelvorgang zweier oder mehrerer Einkaufswagen 1 nicht. Der Schwerpunkt der Anschlageinrichtung 25 kann aber auch so plaziert sein, daß die Anschlageinrichtung 25 beim Loslassen immer in die Nichtgebrauchslage fällt, d. h., beim Beladen der Ablage 14 mit einem Gegenstand muß die Anschlageinrichtung 25 so lange von Hand in der Gebrauchslage gehalten werden, bis der Gegenstand 27 auf der Ablage 14 abgestellt ist.

## Patentansprüche

1. Stapelbarer Einkaufswagen (1), mit einem Fahrgestell (2), mit einer Warentrageinrichtung (8), an ihrem hinteren Ende von einer verschwenkbaren Rückenwand (15) begrenzt ist, mit einer Schiebeeinrichtung und mit einer im hinteren Bereich des Einkaufswagens vorgesehenen, aus einer Nichtgebrauchslage in eine Gebrauchslage und umgekehrt bewegbaren, mit einer Stellfläche (19) und mit einer ortsfesten Anschlageinrichtung (21) ausgestatteten Ablage (14), die zur Aufnahme größerer Gegenstände bestimmt ist, wobei die ortsfeste Anschlageinrichtung (21) nach oben gerichtet am hinteren Ende (16) der Stellfläche (19) angeordnet ist, dadurch **gekennzeichnet,** daß eine weitere Anschlageinrichtung (25) vorgesehen ist, die am hinteren Ende (16) der Ablage (14) um eine horizontale Achse (24) bewegbar so angeordnet ist, daß die weitere Anschlageinrichtung (25) in Gebrauchslage höher ist als die ortsfeste Anschlageinrichtung (21) und daß die weitere Anschlageinrichtung (25) in Nichtgebrauchslage entweder auf der Stellfläche (19) der Ablage (14) aufliegt oder in der Stellfläche (19) eingebettet ist oder daß die weitere Anschlageinrichtung (25) an der ortsfesten Anschlageinrichtung (21) anliegt.

2. Stapelbarer Einkaufswagen nach Anspruch 1, dadurch **gekennzeichnet,** daß die weitere Anschlageinrichtung (25) in Gebrauchslage an der ortsfesten Anschlageinrichtung (21) anschlägt.

3. Stapelbarer Einkaufswagen nach Anspruch 1 oder 2, dadurch **gekennzeichnet,** daß die weitere Anschlageinrichtung (25) in Nichtgebrauchslage an der Innenseite (23) der ortsfesten Anschlageinrichtung (21) anliegt.

4. Stapelbarer Einkaufswagen nach einem der Ansprüche 1 bis 3, dadurch **gekennzeichnet,** daß die Lage des Schwerpunktes der weiteren Anschlageinrichtung (25) so gewählt ist, daß diese (25) in der Gebrauchslage verharrt, sofort jedoch dann von selbst ihre Nichtgebrauchslage aufsucht, wenn die Ablage (14) in die Nichtgebrauchslage bewegt wird.

5. Stapelbarer Einkaufswagen nach einem der Ansprüche 1 bis 3, dadurch **gekennzeichnet,** daß die Lage des Schwerpunktes der weiteren Anschlageinrichtung (25) so gewählt ist, daß diese (25) nicht von selbst in ihrer Gebrauchslage verharrt, sondern von selbst die Nichtgebrauchslage aufsucht.

## Claims

1. A stackable shopping trolley (1), having a wheel frame (2), having a goods carrying arrangement (8) bounded at its rear end by a pivotable back wall (15), having a pushing arrangement and having a rack (14) which is provided in the rear region of the shopping trolley, is movable from an out-of-use position into an in-use position and vice-versa, has a deposit surface (19) and a fixed stop arrangement (21) and is for receiving relatively large objects, the fixed stop arrangement (21) being arranged at the rear end (16) of the deposit surface (19) in an upwardly directed manner, characterised in that an additional stop arrangement (25) is provided which is arranged - so as to be movable about a horizontal axis (24) - at the rear end (16) of the rack (14) in such a manner that the additional stop arrangement (25) is taller in the in-use position than the fixed stop arrangement (21), and that in the out-of-use position, the additional stop arrangement (25) either rests on the deposit surface of the rack (14) or is embedded in the deposit surface (19), or that the additional stop arrangement (25) contacts the fixed stop arrangement (21).

2. A stackable shopping trolley in accordance with Claim 1, characterised in that, in the in-use position, the additional stop arrangement (25) strikes against the fixed stop arrangement (21).

3. A stackable shopping trolley in accordance with Claim 1 or 2, characterised in that, in the out-of-use position, the additional stop arrangement (25) contacts the inner side (23) of the fixed stop arrangement (21).

4. A stackable shopping trolley in accordance with any one of Claims 1 to 3, characterised in that the position of the centre of gravity of the additional stop arrangement (25) is selected such that the latter remains in the in-use position, but immediately automatically moves to its out-of-use position when the rack (14) is moved into the out-of-use position.

5. A stackable shopping trolley in accordance with any one of Claims 1 to 3, characterised in that the position of the centre of gravity of the additional stop arrangement (25) is selected such that the latter does not automatically remain in its in-use position, but automatically moves to the out-of-use position.

## Revendications

1. Chariot à achats (1) emboîtable (en d'autres chariots semblables), comprenant un châssis roulant (2), un dispositif porteur de marchandises (8) qui est délimité à son extrémité arrière par une paroi arrière (10) oscillante pouvant être écartée, un dispositif de poussée, ainsi qu'un support additionnel (14) prévu dans la zone arrière du chariot, déplaçable d'une position de non-utilisation à une position d'utilisation et inversement et muni d'une surface de support (19) pour poser des marchandises et d'un dispositif de retenue ou butée fixe (21), support additionnel qui est destiné à recevoir des objets relativement grands, la butée fixe (21) étant dirigée vers le haut et disposée à l'extrémité arrière (16) de la surface de support (19), **caractérisé** en ce qu'une butée supplémentaire (25) est prévue, qui est disposée mobile autour d'un axe horizontal (24) à l'extrémité arrière (16) du support additionnel (14), de manière que cette butée supplémentaire (25) soit plus haute, dans sa position d'utilisation, que la butée fixe (21), et que la butée supplémentaire (25) dans sa position de non-utilisation repose sur la surface de support (19) ou soit encastrée dans cette surface du support additionnel (14), ou que la butée supplémentaire (25) s'applique contre la butée fixe (21).

2. Chariot à achats emboîtable selon la revendication 1, caractérisé en ce que la butée supplémentaire (25) s'applique en position d'utilisation contre la butée fixe (21).

3. Chariot à achats emboîtable selon la revendication 1 ou 2, caractérisé en ce que la butée supplémentaire (25) en position de non-utilisation est appuyée contre le côté intérieur (23) du dispositif de butée fixe (21).

4. Chariot à achats emboîtable selon une des revendications 1 à 3, caractérisé en ce que l'emplacement du centre de gravité de la butée supplémentaire (25) est choisi de manière que celle-ci (25) reste normalement dans sa position d'utilisation, mais prenne immédiatement et automatiquement sa position de non-utilisation lorsque le support additionnel (14) est amené à sa position de non-utilisation.

5. Chariot à achats emboîtable selon une des revendications 1 à 3, caractérisé en ce que l'emplacement du centre de gravité de la butée supplémentaire (25) est choisi de manière que celle-ci (25) ne reste pas d'elle-même à sa position d'utilisation, mais prenne automatiquement la position de non-utilisation.
